Europäisches Patentamt

**European Patent Office**

**Office européen des brevets**

(19)

(11) Numéro de publication : **0 023 866**
**B1**

(12) # FASCICULE DE BREVET EUROPÉEN

(45) Date de publication du fascicule du brevet :
**11.05.83**

(51) Int. Cl.³ : **F 24 J 3/00**

(21) Numéro de dépôt : **80401126.0**

(22) Date de dépôt : **30.07.80**

(54) **Accumulateur thermique à chaleur latente de fusion et à contact direct.**

(30) Priorité : **02.08.79 FR 7919866**

(43) Date de publication de la demande :
**11.02.81 Bulletin 81/06**

(45) Mention de la délivrance du brevet :
**11.05.83 Bulletin 83/19**

(84) Etats contractants désignés :
**DE GB IT NL SE**

(56) Documents cités :
**FR A 2 273 251**
**FR A 2 279 052**
**US A 2 631 835**
**US A 3 937 209**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Bricard, Alain** ·
**17, rue Augereau**
**F-38000 Grenoble (FR)**
Inventeur : **Chabanne, Jacques**
**56bis, rue de la Liberté**
**F-38600 Fontaine (FR)**
Inventeur : **Duret, Bernard**
**4, rue Diodore Rahoult**
**F-38000 Grenoble (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Accumulateur thermique à chaleur latente de fusion et à contact direct

L'invention concerne un perfectionnement au procédé d'accumulation thermique décrit dans le FR-A-2 279 052 et dans le FR-A-2 273 251 au nom du demandeur, ainsi qu'aux accumulateurs thermiques pour la mise en œuvre de ce procédé.

L'accumulateur thermique décrit dans le FR-A-2 279 052 fonctionne sur le principe du stockage de chaleur par fusion de corps purs ou de mélanges eutectiques à fusion congruente, les transferts de chaleur s'effectuant entre ce matériau fusible et un fluide caloporteur.

Plus précisément, le procédé d'accumulation thermique faisant l'objet du FR-A-2 279 052 se caractérise en ce qu'on fait passer un fluide caloporteur F en contact direct avec un matériau C à chaleur latente de fusion élevée, le fluide F et le matériau C échangeant de la chaleur à une température voisine de la température de fusion du corps C, de telle sorte que, lorsque l'on fait circuler le fluide F chaud en contact direct avec le matériau C, ce dernier fond et accumule de la chaleur sous forme de chaleur latente de fusion en refroidissant le fluide F et, lorsqu'on fait passer le fluide F froid en contact direct avec le matériau C liquide, ce dernier se solidifie en libérant de la chaleur qui est transmise au fluide caloporteur F.

Toujours selon le FR-A-2 279 052, le matériau C subit les transformations de changement de phase liquide-solide dans des soles métalliques de stockage, de telle sorte qu'il reste immobile en permanence.

Dans le FR-A-2 273 251, il a été proposé un perfectionnement au FR-A-2 279 052 permettant d'améliorer les échanges thermiques entre le matériau C et le fluide caloporteur F en faisant circuler ces deux corps soit à co-courant, soit à contre-courant, de façon à augmenter leurs surfaces de contact.

Plus précisément, le procédé d'accumulation et de restitution de chaleur selon le FR-A-2 273 251 se caractérise en ce qu'on emmagasine, à la demande, de la chaleur, principalement sous forme de chaleur latente de fusion, en faisant circuler un fluide caloporteur F chaud en contact direct avec un matériau C à chaleur latente de fusion élevée et sous forme solide divisée, la température du fluide F étant supérieure à la température de fusion du matériau C qui fond sous l'effet de l'apport calorifique du fluide F, et en ce qu'on restitue, à la demande, de la chaleur emmagasinée par le matériau C à l'état liquide en faisant circuler ce dernier sous forme de gouttelettes liquides en contact direct avec le fluide F dont la température est inférieure à la température de fusion du matériau C, ce dernier se solidifiant en grains et cédant de la chaleur au fluide F.

Bien que le procédé et le dispositif faisant l'objet du FR-A-2 279 052 et du FR-A-2 273 251 soient d'un maniement commode et donnent d'excellents résultats, il est souhaitable, notamment lorsque le fluide caloporteur F est un liquide, de limiter la masse de ce dernier lorsqu'on désire stocker une grande quantité d'énergie calorifique, cette dernière étant directement proportionnelle à la quantité de matériau C utilisée. En effet, lorsque le fluide caloporteur circule comme l'enseigne le premier certificat d'addition dans un réservoir de stockage E destiné à recevoir le matériau en grains C, le volume de fluide mis en œuvre doit être égal au volume du réservoir E, après l'étape de charge ou d'accumulation de la chaleur par fusion du matériau C, et égal au volume du réservoir E diminué du volume de particules solides C à la fin de l'étape de décharge ou de restitution de la chaleur emmagasinée dans le matériau C. A titre d'exemple, on a calculé dans le cas d'un accumulateur thermique couplé à un réacteur à neutrons rapides et à un générateur de vapeur fonctionnant pendant une pointe de consommation de deux heures et fournissant une puissance de 750 MW thermiques correspondant à une énergie accumulée de 1 500 MWh thermiques, le matériau C étant le mélange eutectique $NaC1-CaC1_2$, que le volume du réservoir de stockage E doit être de l'ordre de 20 000 m³ pour une porosité du lit de particules solides de 0,5.

Lorsque le fluide caloporteur F est un gaz, la masse correspondant à ce volume est relativement faible et le système peut être utilisé sans inconvénient majeur suivant le procédé décrit dans le FR-A-2 273 251.

Par contre, lorsque le fluide caloporteur est liquide, la masse correspondant au volume de liquide mis en œuvre devient importante. Ainsi, dans l'exemple considéré, si le fluide caloporteur est constitué par du sodium, la masse de sodium correspondant à un réservoir de stockage E de 20 000 m³ est de 16 600 tonnes.

De plus, en raison de la variante de volume disponible dans le réservoir de stockage E entre les étapes de charge et de décharge, l'accumulateur thermique faisant l'objet du FR-A-2 273 251 doit comporter un vase d'expansion de grand volume susceptible d'emmagasiner l'excédent de fluide caloporteur F. Dans l'exemple considéré, ce vase d'expansion aurait une capacité de 10 000 m³.

Il est donc souhaitable de diminuer notablement le volume de fluide caloporteur mis en œuvre notamment lorsque celui-ci est un liquide, et de le rendre pratiquement indépendant du volume du réservoir de stockage, c'est-à-dire de la quantité de matériau C que l'on souhaite mettre en œuvre et de la quantité d'énergie que l'on désire stocker.

Dans ce but, la présente invention propose un perfectionnement à l'accumulateur thermique qui fait l'objet du FR-A-2 279 052 et du FR-A-2 273 251.

Ainsi, conformément à un premier aspect de l'invention, il est proposé un accumulateur thermique à chaleur latente de fusion comprenant :

— un premier réservoir de stockage E susceptible de contenir un lit de matériau C en grains à chaleur latente de fusion élevée ;

— un second réservoir de stockage E′ susceptible de contenir le matériau C à l'état liquide et communiquant avec l'extrémité inférieure du réservoir E par l'intermédiaire d'une vanne

— un circuit de charge comprenant au moins une pompe de circulation d'un fluide caloporteur F et des moyens $C_1$ pour chauffer ce fluide F à une température supérieure à la température de fusion du matériau C, une partie de ce circuit de charge étant disposée à l'intérieur du premier réservoir de stockage E, de telle sorte que le matériau C contenu dans ce dernier fond sous l'effet de l'apport calorifique du fluide F ;

— un circuit de décharge comprenant au moins une pompe de circulation du fluide F, des moyens $C_2$ pour refroidir le fluide F à une température inférieure à la température de fusion du matériau C, et un échangeur de décharge D communiquant avec la partie supérieure du premier réservoir de stockage E et dans lequel le fluide F circule en contact direct avec le matériau C à l'état liquide, de telle sorte que ce dernier cède de la chaleur au fluide F en se solidifiant sous forme de grains ; et

— un circuit de pompage du matériau C à l'état liquide reliant le second réservoir de stockage E′ à l'échangeur de décharge D et comprenant au moins une pompe de circulation ;
caractérisé en ce que

— ladite partie du circuit de charge disposée à l'intérieur du premier réservoir de stockage E est disposée à la partie inférieure du lit de matériau C contenu dans ce dernier, sur une hauteur correspondant à une fraction de la hauteur maximale de ce lit ;

— le circuit de pompage est tel que le matériau C à l'état liquide est introduit à la partie supérieure de l'échangeur de décharge D et circule de haut en bas dans ce dernier ;

— le circuit de décharge est tel que le fluide F circule de bas en haut à l'intérieur de l'échangeur de décharge D, c'est-à-dire à contre-courant par rapport au matériau C ; et

— un circuit de transport du matériau C en grains formé dans l'échangeur de décharge D jusqu'au premier réservoir de stockage E est prévu, ce circuit de transport comprenant une première partie reliant une ouverture formée à la partie inférieure du premier réservoir de stockage E au circuit de décharge en amont de l'échangeur de décharge D et comprenant un vase d'expansion B et au moins une pompe de circulation et une deuxième partie 12 reliant une ouverture formée à l'extrémité inférieure du réservoir de décharge D à une ouverture formée à l'extrémité supérieure du premier réservoir de stockage E.

Conformément à un second aspect de l'invention, il est proposé un accumulateur thermique à chaleur latente de fusion comprenant :

— un premier réservoir de stockage E susceptible de contenir un lit de matériau C en grains à chaleur latente de fusion élevée ;

— un second réservoir de stockage E′ susceptible de contenir le matériau C à l'état liquide et communiquant avec l'extrémité inférieure du réservoir E par l'intermédiaire d'une vanne ;

— un circuit de charge comprenant au moins une pompe de circulation d'un fluide caloporteur F et des moyens $C_1$ pour chauffer ce fluide F à une température supérieure à la température de fusion du matériau C, une partie de ce circuit de charge étant disposée à l'intérieur du premier réservoir de stockage E, de telle sorte que le matériau C contenu dans ce dernier fond sous l'effet de l'apport calorifique du fluide F ;

— un circuit de décharge comprenant au moins une pompe de circulation du fluide F, des moyens $C_2$ pour refroidir le fluide F à une température inférieure à la température de fusion du matériau C, et un échangeur de décharge D communiquant avec la partie supérieure du premier réservoir de stockage E et dans lequel le fluide F circule en contact direct et à co-courant avec le matériau C à l'état liquide, de telle sorte que ce dernier cède de la chaleur au fluide F en se solidifiant sous forme de grains ; et

— un circuit de pompage du matériau C à l'état liquide reliant le second réservoir de stockage E′ à l'échangeur de décharge D et comprenant au moins une pompe de circulation ;
caractérisé en ce que

— ladite partie du circuit de charge disposée à l'intérieur du premier réservoir de stockage E est disposée à la partie inférieure du lit de matériau C contenu dans ce dernier, sur une hauteur correspondant à une fraction de la hauteur maximale de ce lit ;

— le circuit de pompage est tel que le matériau C à l'état liquide est introduit à la partie inférieure de l'échangeur de décharge D, et circule de haut en bas dans ce dernier ; et

— le circuit de décharge est tel que le fluide F circule de haut en bas à l'intérieur de l'échangeur de décharge D et il comprend une première partie reliant une ouverture formée à la partie inférieure du premier réservoir de stockage E à une ouverture formée à la partie supérieure de l'échangeur de décharge D et comprenant les moyens $C_2$ pour refroidir le fluide F, un vase d'expansion B et ladite pompe de circulation, et une deuxième partie 12 reliant une ouverture formée à l'extrémité inférieure du réservoir de décharge D à une ouverture formée à l'extrémité supérieure du premier réservoir de stockage E.

Dans les deux cas, le fluide caloporteur F circulant uniquement dans la partie inférieure du lit de matériau en grains C pendant la phase de charge, et le fluide F et le matériau C à l'état liquide étant mis en contact en dehors du réservoir de stockage E du matériau C en grains, le volume du fluide caloporteur F peut être réduit et limité à une valeur pratiquement indépendante de la dimension du réservoir de stockage E. On a constaté en effet expérimentalement que la fusion du matériau C lors de la phase de charge s'effectue essentiellement dans la partie basse du lit de matériau C, sur une hauteur de l'ordre de

$1/20^e$ de la hauteur totale de celui-ci, et s'accompagne d'un tassement progressif et régulier du lit. Dans l'hypothèse décrite précédemment à titre d'exemple, le volume de sodium se trouve ainsi limité à environ 500 m³. De même, la mise en contact du fluide F et du matériau C dans un échangeur de décharge D nettement séparé du réservoir de stockage E permet d'assurer la solidification du matériau C avant son transport dans ce dernier et limite également le volume de fluide F nécessaire à l'étape de décharge. Enfin, ce résultat se trouve accentué par le fait que le transport du matériau en grains formé dans l'échangeur D jusqu'au réservoir de stockage E est réalisé à l'aide d'une partie au moins du fluide F prélevé à la partie inférieure de ce dernier réservoir.

De préférence, les moyens $C_1$ pour chauffer le fluide F sont constitués par un échangeur de chaleur dont le circuit secondaire est constitué par le circuit de charge.

De même, les moyens $C_2$ pour refroidir le fluide F sont constitués par un échangeur de chaleur dont le circuit primaire est constitué par le circuit de décharge.

Selon une première variante, le circuit de charge débouche dans le premier réservoir de stockage E par deux ouvertures, de telle sorte que le fluide caloporteur F circulant dans le circuit de charge soit en contact direct avec la partie inférieure du lit de matériau C.

Selon une deuxième variante, le circuit de charge constitue le circuit primaire d'un échangeur de chaleur formé dans le premier réservoir de stockage E à la partie inférieure du lit de matériau C.

On décrira maintenant, à titre d'exemples non limitatifs, différentes variantes de réalisation de l'invention en se référant aux dessins annexés dans lesquels :

la figure 1 représente, de façon schématique, un accumulateur thermique à chaleur latente de fusion réalisé conformément aux enseignements de la présente invention, et

la figure 2 représente une variante de réalisation de l'accumulateur de la fig. 1.

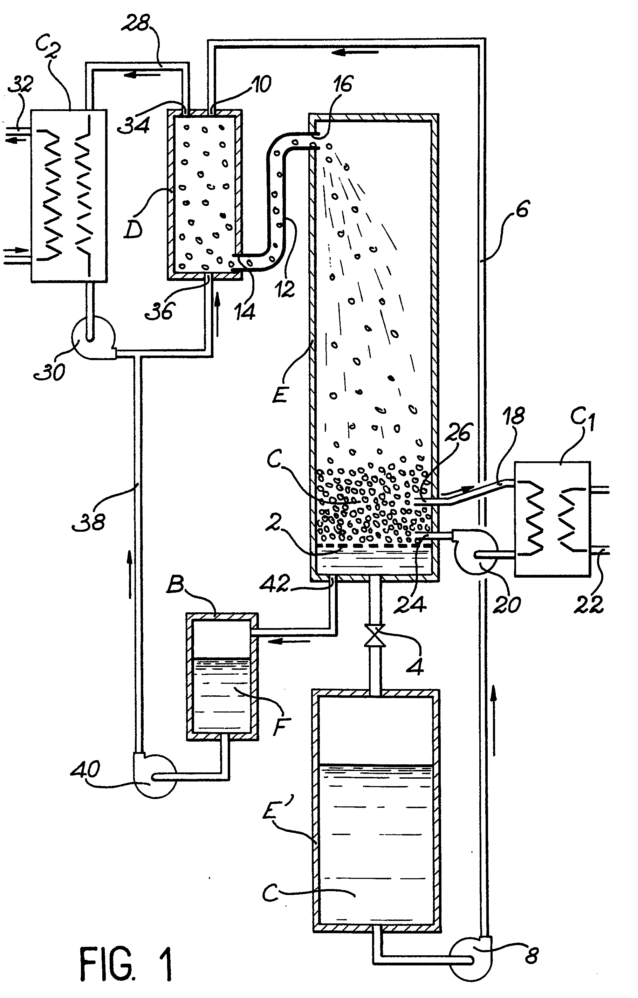

Dans le mode de réalisation de l'invention représenté sur la fig. 1, l'accumulateur thermique comprend un réservoir de stockage E du matériau C sous forme de grains et un réservoir de stockage E′ du matériau C sous forme liquide. Un filtre 2 est disposé dans la partie inférieure du réservoir E afin de retenir le lit constitué par le matériau en grains C. Le réservoir E est disposé au-dessus du réservoir E′ et communique avec ce dernier par l'intermédiaire d'une vanne 4. Le réservoir E′ est calorifugé et des moyens de chauffage (non représentés) tels qu'une résistance peuvent être prévus de façon à maintenir le matériau C sous forme liquide dans le réservoir E′. Un circuit de pompage comprenant une conduite 6 et une pompe 8 relie le réservoir de stockage E′ à une ouverture 10 formée dans la partie supérieure d'un échangeur de décharge D. L'échangeur de décharge D est situé au voisinage de la partie haute du réservoir de stockage E avec laquelle il communique par une conduite 12 reliant une ouverture 14 formée à la partie inférieure de l'échangeur de décharge D à une ouverture 16 débouchant dans la partie supérieure du réservoir de stockage E. La section de la conduite 12 est choisie de façon à permettre le passage du matériau C sous forme granulée.

L'accumulateur thermique selon l'invention comprend, de plus, un circuit de charge comportant une conduite 18 et une pompe 20, ce circuit de charge constituant le circuit secondaire d'un échangeur de chaleur $C_1$ dont le circuit primaire 22 est parcouru par un flux de liquide préalablement chauffé par une source de chaleur, telle qu'une centrale thermique ou nucléaire ou que le rayonnement solaire. Conformément à l'invention, le circuit de charge comprend également une partie située à l'intérieur du réservoir de stockage E, dans la partie basse de ce réservoir. Dans le mode de réalisation représenté sur la fig. 1, l'échange de chaleur entre le fluide caloporteur F véhiculé dans la conduite 18 et le matériau C s'effectue par contact direct, de telle sorte que le circuit de charge débouche par une ouverture d'entrée 24 et par une ouverture de sortie 26 dans le réservoir E, les ouvertures 24 et 26 étant situées respectivement à l'extrémité inférieure de la pile formée par le matériau C et à une distance sensiblement égale à $1/20^e$ de la hauteur totale maximum de cette pile au-dessus de son extrémité inférieure.

L'accumulateur thermique selon l'invention comprend, de plus, un circuit de décharge comportant une conduite 28 et une pompe 30 et constituant le circuit primaire d'un échangeur de chaleur $C_2$ dont le circuit secondaire 32 alimente une installation d'utilisation (non représentée). Dans la variante de réalisation représentée sur la fig. 1, le circuit de décharge relie une ouverture 34 formée à la partie supérieure de l'échangeur de décharge D à une ouverture 36 formée à la partie inférieure de cet échangeur.

L'accumulateur de chaleur selon l'invention comprend également un circuit de transport du matériau en grains C formé dans l'échangeur de décharge D, ce circuit comprenant la conduite 12, une partie de la conduite 28 située en amont de l'ouverture 36, une conduite 38, une pompe 40 et un vase d'expansion B. La conduite 38 relie une ouverture 42 formée à la partie inférieure du réservoir de stockage E à la conduite 28, en amont de l'ouverture 36. Des moyens, non représentés, sont prévus pour séparer le fluide F s'écoulant par 42 du matériau fondu C s'évacuant par 4.

Le fonctionnement de l'accumulateur qui vient d'être décrit en se référant à la fig. 1 est le suivant :

Pendant l'étape de charge de l'accumulateur ou d'accumulation de la chaleur, le circuit primaire 22 de l'échangeur $C_1$ est parcouru par un flux de liquide chaud qui échange de la chaleur avec le fluide F circulant dans le circuit de charge, c'est-à-dire dans la conduite 18 et dans la

partie inférieure du réservoir de stockage E entre l'ouverture d'entrée 24 et l'ouverture de sortie 26. Le fluide F ainsi réchauffé liquéfie la partie inférieure du lit formé par le matériau C en grains, qui s'écoule alors sous forme liquide dans le réservoir E' après ouverture de la vanne 4. Le matériau C sous forme de particules solides restant dans le réservoir E subit un tassement progressif et régulier tel que la totalité du matériau en grains C vient progressivement dans la partie basse du réservoir E où il est liquéfié au fur et à mesure par le fluide caloporteur circulant dans le circuit de charge et préalablement chauffé dans l'échangeur $C_1$.

Au cours de la phase de décharge, c'est-à-dire lorsque l'on souhaite récupérer une partie de l'énergie emmagasinée, le matériau liquide C contenu dans le réservoir E' est acheminé par la conduite 6 jusqu'à l'ouverture 10 formée dans la partie supérieure de l'échangeur de décharge D. Simultanément, le fluide caloporteur contenu dans le vase d'expansion B est acheminé par la conduite 38 et par la conduite 28 jusqu'à l'ouverture 36 formée dans la partie inférieure de l'échangeur D. Le matériau liquide C et le fluide caloporteur F circulent ainsi à contre-courant à l'intérieur de l'échangeur D, de telle sorte que le fluide F se réchauffe et que le matériau C se solidifie sous forme de grains. La majeure partie du fluide F réchauffé est évacuée de l'échangeur D par l'ouverture 34 et acheminée par la conduite 28 jusqu'à l'échangeur $C_2$, dans lequel cette chaleur est récupérée par le fluide circulant dans le circuit 32 et acheminée vers une installation d'utilisation (non représentée). Comme l'illustre la fig. 1, le reste du fluide F est utilisé pour transporter les grains de matériau C formés dans l'échangeur D jusqu'à l'ouverture 16 formée à la partie supérieure du réservoir de stockage E, par la conduite 12. La partie du fluide F utilisée pour transporter les grains de matériau C formés dans l'échangeur D à l'intérieur du réservoir E est recyclée vers le vase d'expansion B par l'ouverture 42 formée à la partie inférieure du réservoir E.

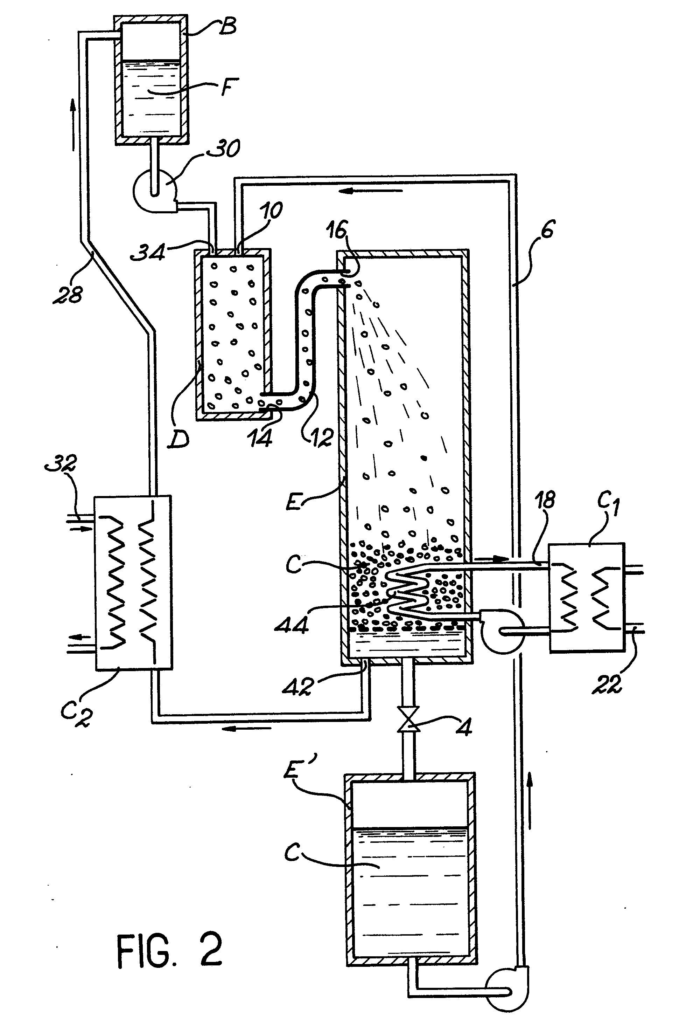

Le mode de réalisation représenté sur la fig. 2 illustre une variante du circuit de charge et une variante du circuit de décharge du dispositif représenté sur la fig. 1.

Dans le mode de réalisation représenté sur la fig. 2, la partie du circuit de charge disposée à l'intérieur du réservoir de stockage E du matériau C sous forme de grains est constituée par un échangeur thermique disposé entre l'extrémité inférieure du lit formé par le matériau C et un niveau situé à environ 1/20e de la hauteur totale maximum occupée par ce lit au-dessus de son extrémité inférieure. Ainsi, la conduite 18 se prolonge à l'intérieur du réservoir E, par exemple par une partie en hélice 44 noyée dans le lit de matériau C, de telle sorte que l'échange de chaleur entre le fluide caloporteur F circulant dans la conduite 18 et le matériau en grains C s'effectue par l'intermédiaire de l'échangeur ainsi constitué.

En outre, dans le mode de réalisation représenté sur la fig. 2, le circuit de décharge et le circuit de transport du matériau en grains C formé dans l'échangeur de décharge D sont constitués par un circuit unique, de telle sorte que le matériau liquide C et le fluide caloporteur F circulent à co-courant à l'intérieur de l'échangeur D. Plus précisément, ce circuit unique comprend une conduite 28 reliant une ouverture 42 formée à l'extrémité inférieure du réservoir E à une ouverture 34 formée à l'extrémité supérieure de l'échangeur D, par l'intermédiaire de l'échangeur $C_2$, dont ce circuit constitue le circuit primaire, du vase d'expansion B et de la pompe 30.

Au cours de la phase de charge de l'accumulateur représenté sur la fig. 2, le fonctionnement est identique à celui de l'accumulateur représenté sur la fig. 1. Ainsi, la chaleur en provenance d'une source d'énergie telle qu'une centrale thermique ou nucléaire est véhiculée jusqu'à l'échangeur $C_1$ par la conduite 22, de telle sorte que le fluide caloporteur F circulant dans la conduite 18 est chauffé et fait fondre par l'intermédiaire de la partie en hélice 44 le matériau en grains C qui se trouve dans la partie inférieure du réservoir E, ce matériau étant évacué sous forme liquide dans le réservoir de stockage E' par la vanne 4. Des moyens, non représentés, séparent le fluide F s'écoulant par 42 du matériau fondu C s'évacuant par 4.

Au cours de la phase de décharge, le matériau C sous forme liquide contenu dans le réservoir E' est véhiculé par la conduite 6 jusqu'à l'ouverture 10 formée à l'extrémité supérieure de l'échangeur D. Simultanément le fluide caloporteur F contenu dans le vase d'expansion B est acheminé par la conduite 28 jusqu'à l'ouverture 34 formée également dans la partie supérieure de l'échangeur D. Le matériau C et le fluide F circulent ainsi à co-courant à l'intérieur de l'échangeur D, de telle sorte que le fluide F se réchauffe et que le matériau C se solidifie sous forme de grains. En raison de la disposition adoptée sur la fig. 2, le fluide caloporteur F admis dans l'échangeur D est utilisé en totalité pour transporter le matériau en grains C dans le réservoir E par l'intermédiaire de l'ouverture 14, de la conduite 12 et de l'ouverture 16. Le fluide caloporteur réchauffé par le matériau C est ensuite recyclé par l'ouverture 42 ménagée dans la partie inférieure du réservoir E et acheminé jusqu'à l'échangeur $C_2$, dans lequel la chaleur accumulée dans le fluide F est transférée au fluide circulant dans le circuit secondaire 32 et véhiculée à une installation d'utilisation (non représentée).

Dans les deux modes de réalisation de l'invention qui viennent d'être décrits en se référant aux fig. 1 et 2, le volume du fluide caloporteur nécessaire à la réalisation des opérations de charge et de décharge est limité pendant la charge en réalisant l'échange de chaleur entre ce fluide et le matériau C en grains à la partie inférieure du lit de matériau et, pendant la décharge, en réalisant le transfert de chaleur entre le matériau C et le fluide F non pas directement à l'intérieur du réservoir E, mais dans un échangeur annexe D dont le volume peut être facilement limité et rendu pratiquement indépendant du volume de matériau C utilisé, c'est-à-dire de la quantité de chaleur que l'on désire stocker au moyen de l'accumulateur selon l'invention.

Les variantes du circuit de charge et du circuit de décharge illustrées sur les fig. 1 et 2 peuvent être combinées de façon différente, la variante du circuit de charge représentée sur la fig. 2 pouvant par exemple être adaptée sur l'accumulateur représenté sur la fig. 1, et inversement. De même, les circuits de charge et de décharge représentés de façon indépendante sur les fig. 1 et 2, peuvent communiquer par l'intermédiaire de vannes, de telle sorte que le fluide F contenu dans le vase d'expansion puisse être utilisé à la fois pour les opérations de charge et pour les opérations de décharge.

Le fonctionnement de l'installation a été décrit dans le cas où le matériau fusible C, non miscible avec le fluide caloporteur F, a une densité supérieure à ce dernier. Dans le cas contraire, on fait fonctionner le dispositif à co-courant pendant l'opération de décharge ; pendant l'opération de charge, le matériau fusible et fondu passe par une ouverture munie de moyens pour séparer le fluide F du matériau fondu C.

### Revendications

1. Accumulateur thermique à chaleur latente de fusion comprenant :

— un premier réservoir de stockage (E) susceptible de contenir un lit de matériau (C) en grains à chaleur latente de fusion élevée ;

— un second réservoir de stockage (E') susceptible de contenir le matériau (C) à l'état liquide et communiquant avec l'extrémité inférieure du réservoir (E) par l'intermédiaire d'une vanne (4) ;

— un circuit de charge (18) comprenant au moins une pompe de circulation (20) d'un fluide caloporteur (F) et des moyens ($C_1$) pour chauffer ce fluide (F) à une température supérieure à la température de fusion du matériau (C), une partie de ce circuit de charge (18) étant disposée à l'intérieur du premier réservoir de stockage (E), de telle sorte que le matériau (C) contenu dans ce dernier fond sous l'effet de l'apport calorifique du fluide (F) ;

— un circuit de décharge (28) comprenant au moins une pompe de circulation (30) du fluide (F), des moyens ($C_2$) pour refroidir le fluide (F) à une température inférieure à la température de fusion du matériau (C), et un échangeur de décharge (D) communiquant avec la partie supérieure du premier réservoir de stockage (E) et dans lequel le fluide (F) circule en contact direct avec le matériau (C) à l'état liquide, de telle sorte que ce dernier cède de la chaleur au fluide (F) en se solidifiant sous forme de grains ; et

— un circuit de pompage (6) du matériau (C) à l'état liquide reliant le second réservoir de stockage (E') à l'échangeur de décharge (D) et comprenant au moins une pompe de circulation (8) ;
caractérisé en ce que

— ladite partie du circuit de charge (18) disposée à l'intérieur du premier réservoir de stockage (E) est disposée à la partie inférieure du lit de matériau (C) contenu dans ce dernier, sur une hauteur correspondant à une fraction de la hauteur maximale de ce lit ;

— le circuit de pompage (6) est tel que le matériau (C) à l'état liquide est introduit à la partie supérieure de l'échangeur de décharge (D), et circule de haut en bas dans ce dernier ;

— le circuit de décharge (28) est tel que le fluide (F) circule de bas en haut à l'intérieur de l'échangeur de décharge (D), c'est-à-dire à contre-courant par rapport au matériau (C) ;

— un circuit de transport (38, 12) du matériau (C) en grains formé dans l'échangeur de décharge (D) jusqu'au premier réservoir de stockage (E) est prévu, ce circuit de transport comprenant une première partie (38) reliant une ouverture formée à la partie inférieure du premier réservoir de stockage (E) au circuit de décharge (28) en amont de l'échangeur de décharge (D) et comprenant un vase d'expansion (B) et au moins une pompe de circulation (40) et une deuxième partie (12) reliant une ouverture formée à l'extrémité inférieure du réservoir de décharge (D) à une ouverture formée à l'extrémité supérieure du premier réservoir de stockage (E).

2. Accumulateur selon la revendication 1, caractérisé en ce que les moyens ($C_1$) pour chauffer le fluide (F) sont constitués par un échangeur de chaleur dont le circuit secondaire est constitué par le circuit de charge (18).

3. Accumulateur selon l'une quelconque des revendications 1 et 2, caractérisé en ce que les moyens ($C_2$) pour refroidir le fluide (F) sont constitués par un échangeur de chaleur dont le circuit primaire est constitué par le circuit de décharge (28).

4. Accumulateur selon l'une quelconque des revendications 1 à 3, caractérisé en ce que le circuit de charge (18) débouche dans le premier réservoir de stockage (E) par deux ouvertures, de telle sorte que le fluide caloporteur (F) circulant dans le circuit de charge soit en contact direct avec la partie inférieure du lit de matériau (C).

5. Accumulateur selon l'une quelconque des revendications 1 à 4, caractérisé en ce que le circuit de charge (18) constitue le circuit primaire d'un échangeur de chaleur (44) formé dans le premier réservoir de stockage (E) à la partie inférieure du lit de matériau (C).

6. Accumulateur thermique à chaleur latente de fusion comprenant :

— un premier réservoir de stockage (E) susceptible de contenir un lit de matériau (C) en grains à chaleur latente de fusion élevée ;

— un second réservoir de stockage (E') susceptible de contenir le matériau (C) à l'état liquide et communiquant avec l'extrémité inférieure du réservoir (E) par l'intermédiaire d'une vanne (4) ;

— un circuit de charge (18) comprenant au moins une pompe de circulation (20) d'un fluide caloporteur (F) et des moyens (C₁) pour chauffer ce fluide (F) à une température supérieure à la température de fusion du matériau (C), une partie de ce circuit de charge (18) étant disposée à l'intérieur du premier réservoir de stockage (E), de telle sorte que le matériau (C) contenu dans ce dernier fond sous l'effet de l'apport calorifique du fluide (F) ;

— un circuit de décharge (28) comprenant au moins une pompe de circulation (30) du fluide (F), des moyens (C₂) pour refroidir le fluide (F) à une température inférieure à la température de fusion du matériau (C), et un échangeur de décharge (D) communiquant avec la partie supérieure du premier réservoir de stockage (E) et dans lequel le fluide (F) circule en contact direct et à co-courant avec le matériau (C) à l'état liquide, de telle sorte que ce dernier cède de la chaleur au fluide (F) en se solidifiant sous forme de grains ; et

— un circuit de pompage (6) du matériau (C) à l'état liquide reliant le second réservoir de stockage (E') à l'échangeur de décharge (D) et comprenant au moins une pompe de circulation (8) ;
caractérisé en ce que

— ladite partie du circuit de charge (18) disposée à l'intérieur du premier réservoir de stockage (E) est disposée à la partie inférieure du lit de matériau (C) contenu dans ce dernier, sur une hauteur correspondant à une fraction de la hauteur maximale de ce lit ;

— le circuit de pompage (6) est tel que le matériau (C) à l'état liquide est introduit à la partie supérieure de l'échangeur de décharge (D) et circule de haut en bas dans ce dernier ; et

— le circuit de décharge (28) est tel que le fluide (F) circule de haut en bas à l'intérieur de l'échangeur de décharge (D) et il comprend une première partie (28) reliant une ouverture (42) formée à la partie inférieure du premier réservoir de stockage (E) à une ouverture (34) formée à la partie supérieure de l'échangeur de décharge (D) et comprenant les moyens (C₂) pour refroidir le fluide (F), un vase d'expansion (B) et ladite pompe de circulation (30), et une deuxième partie (12) reliant une ouverture (14) formée à l'extrémité inférieure du réservoir de décharge (D) à une ouverture (16) formée à l'extrémité supérieure du premier réservoir de stockage (E).

7. Accumulateur selon la revendication 6, caractérisé en ce que les moyens (C₁) pour chauffer le fluide (F) sont constitués par un échangeur de chaleur dont le circuit secondaire est constitué par le circuit de charge (18).

8. Accumulateur selon l'une quelconque des revendications 6 et 7, caractérisé en ce que les moyens (C₂) pour refroidir le fluide (F) sont constitués par un échangeur de chaleur dont le circuit primaire est constitué par le circuit de décharge (28).

9. Accumulateur selon l'une quelconque des revendications 6 à 8, caractérisé en ce que le circuit de charge (18) débouche dans le premier réservoir de stockage (E) par deux ouvertures, de telle sorte que le fluide caloporteur (F) circulant dans le circuit de charge soit en contact direct avec la partie inférieure du lit de matériau (C).

10. Accumulateur selon l'une quelconque des revendications 6 à 9, caractérisé en ce que le circuit de charge (18) constitue le circuit primaire d'un échangeur de chaleur (44) formé dans le premier réservoir de stockage (E) à la partie inférieure du lit de matériau (C).

**Claims**

1. Thermal storage device using latent heat of fusion and comprising :

— a first storage reservoir (E) adapted to contain a bed of granular material (C) having an elevated latent heat of fusion ;

— a second storage reservoir (E') adapted to contain material (C) in its liquid state and communicating with the lower end of reservoir (E) through a valve (4) ;

— a charge circuit (18) comprising at least one pump (20) for circulating a heat transfer fluid (F) and means (C₁) for heating the fluid (F) to a temperature above the fusion temperature of material (C), a part of the charge circuit being disposed within the first storage reservoir (E), whereby the material contained within the latter melts through the effect of the heat carried by fluid (F) ;

— a discharge circuit (28) comprising at least one pump (30) for circulating fluid (F), means (C₂) for cooling the fluid (F) to a temperature below the fusion temperature of material (C), and a discharge exchanger (D) communicating with the upper part of the first storage reservoir (E) and in which fluid (F) circulates in direct contact with liquid material (C), whereby the latter gives up its heat content to fluid (F) and solidifies into granular form ; and

— a pumping circuit (6) for liquid material (C) connecting the second storage reservoir (E') to the discharge exchanger (D) and comprising at least one circulation pump (8) ;
characterized in that

— the said part of the charge circuit (18) disposed within the first storage reservoir (E) is located in the lower part of the bed of material (C) contained therein, at a height corresponding to a fraction of the maximum height of the bed ;

— the pumping circuit (6) is such that liquid material (C) is introduced into the upper part of the discharge exchanger (D) and circulates downwardly through the latter ;

— the discharge circuit (28) is such that the fluid (F) circulates upwardly through the discharge exchanger (D) in counter-current to the material (C) ;

— a transport circuit (38, 12) is provided for transporting granular material (C) formed in the discharge exchanger (D) into the first storage reservoir (E), said transport circuit comprising a first part (38) connecting an opening at the lower end of the first storage reservoir (E) to the

discharge circuit (28) upstream of the discharge exchanger (D) and comprising an expansion chamber (B) and at least one circulation pump (40), and a second part (12) connecting an opening at the lower end of discharge reservoir (D) to an opening at the upper end of the first storage reservoir (E).

2. Storage device according to Claim 1, characterized in that the means $(C_1)$ for heating the fluid (F) comprise a heat exchanger whose secondary circuit is the charge circuit (18).

3. Storage device according to either of Claims 1 and 2, characterized in that the means $(C_2)$ for cooling the fluid (F) comprise a heat exchanger whose primary circuit is the discharge circuit (28).

4. Storage device according to any one of Claims 1 to 3, characterized in that the charge circuit (18) communicates with the first storage reservoir (E) through two openings, whereby the heat transfer fluid (F) circulating in the charge circuit is in direct contact with the lower part of the bed of material (C).

5. Storage device according to any one of Claims 1 to 4, characterized in that the charge circuit (18) comprises the primary circuit of a heat exchanger (44) located in the lower part of the bed of material (C) in the first storage reservoir (E).

6. Thermal storage device using latent heat of fusion and comprising :
— a first storage reservoir (E) adapted to contain a bed of granular material (C) having an elevated latent heat of fusion ;
— a second storage reservoir (E') adapted to contain material (C) in its liquid state and communicating with the lower end of reservoir (E) through a valve (4) ;
— a charge circuit (18) comprising at least one pump (20) for circulating a heat transfer fluid (F) and means $(C_1)$ for heating the fluid (F) to a temperature above the fusion temperature of material (C), a part of the charge circuit being disposed within the first storage reservoir (E), whereby the material contained within the latter melts through the effect of the heat carried by fluid (F) ;
— a discharge circuit (28) comprising at least one pump (30) for circulating fluid (F), means $(C_2)$ for cooling the fluid (F) to a temperature below the fusion temperature of material (C), and a discharge exchanger (D) communicating with the upper part of the first storage reservoir (E) and in which fluid (F) circulates in direct contact and in co-current with liquid material (C), whereby the latter gives up its heat content to fluid (F) and solidifies into granular form ; and
— a pumping circuit (6) for liquid material (C) connecting the second storage reservoir (E') to the discharge exchanger (D) and comprising at least one circulation pump (8) ;
characterized in that
— the said part of the charge circuit (18) disposed within the first storage reservoir (E) is located in the lower part of the bed of material (C) contained therein, at a height corresponding to a fraction of the maximum height of the bed ;
— the pumping circuit (6) is such that liquid material (C) is introduced into the upper part of the discharge exchanger (D) and circulates downwardly through the latter ; and
— the discharge circuit is such that fluid (F) circulates downwardly through the discharge exchanger (D), and comprises a first part (28) connecting an opening (42) in the lower part of the first storage reservoir (E) to an opening (34) in the upper part of the discharge exchanger (D), and comprises means $(C_2)$ for cooling fluid (F), an expansion chamber (B) and said circulation pump (30), and a second part (12) connecting an opening (14) at the lower end of discharge exchanger (D) to an opening (16) at the upper end of the first storage reservoir (E).

7. Storage device according to Claim 6, characterized in that the means $(C_1)$ for heating the fluid (F) comprise a heat exchanger whose secondary circuit is the charge circuit (18).

8. Storage device according to either of Claims 6 and 7, characterized in that the means $(C_2)$ for cooling the fluid (F) comprise a heat exchanger whose primary circuit is the discharge circuit (28).

9. Storage device according to any one of Claims 6 to 8, characterized in that the charge circuit (18) communicates with the first storage reservoir (E) through two openings, whereby the heat transfer fluid (F) circulating in the charge circuit is in direct contact with the lower part of the bed of material (C).

10. Storage device according to any one of Claims 6 to 9, characterized in that the charge circuit (18) comprises the primary circuit of a heat exchanger (44) located in the lower part of the bed of material (C) in the first storage reservoir (E).

**Ansprüche**

1. Schmelzwärme-Wärmespeicher, umfassend :
— einen ersten Speicherbehälter (E), welcher ein Bett aus körnigem Material (C) mit hoher Schmelzwärme enthalten kann ;
— einen zweiten Speicherbehälter (E), welcher das Material (C) in flüssigem Zustand enthalten kann und mit dem unteren Ende des Speicherbehälters (E) über ein Ventil (4) verbindbar ist ;
— einen Zuführkreis (18), welcher mindestens eine Umwälzpumpe (20) für einen Wärmeträger (F) und Mittel $(C_1)$ zum Erwärmen des Fluids (F) auf eine höhere Temperatur als die Schmelztemperatur des Materials (C) aufweist, wobei ein Teil des Zuführkreises (18) im Inneren des ersten Speicherbehälters (E) derart enthalten ist, daß das in diesem enthaltene Material (C) unter der Wirkung der Wärmezuführung des Fluids (F) schmilzt ;
— einen Abgabekreis (28), welcher mindestens eine Umwälzpumpe (30) für das Fluid (F), Mittel $(C_2)$ zum Abkühlen des Fluids (F) auf eine niederere Temperatur als die Schmelztemperatur des Materials (C) und einen Abgabeaustauscher (D) aufweist, der mit dem oberen Teil des ersten Speicherbehälters (E) verbunden ist und in dem das Fluid (F) in direkter Berührung mit dem Material (C) im flüssigen Zustand derart strömt, daß letzteres Wärme an das Fluid (F) abgibt, wobei es in Form von Körnern erstarrt ; und

— einen Förderkreis (6) für das Material (C) im flüssigen Zustand, welcher den zweiten Speicherbehälter (E') mit dem Abgabeaustauscher (D) verbindet und wenigstens eine Umwälzpumpe (8) enthält ;

dadurch gekennzeichnet, daß

— der im Inneren des ersten Speicherbehälters (E) angeordnete Teil des Zuführkreises (18) im unteren Teil des in jenem enthaltenen Bettes des Materials (C) auf einer Höhe angeordnet ist, die einem Teil der maximalen Höhe dieses Bettes entspricht ;

— der Förderkreis (6) derart ist, daß das Material (C) im flüssigen Zustand in den oberen Teil des Abgabeaustauschers (D) eingebracht wird und in diesem von oben nach unten strömt ;

— der Abgabekreis (28) derart ist, daß das Fluid (F) im Inneren des Abgabeaustauschers (D) von unten nach oben fließt, d. h. im Gegenstrom in bezug auf das Material (C) ;

— ein Transportkreis (38, 12) für das in dem Abgabeaustauscher (D) gebildete, körnige Material (C) bis zum ersten Speicherbehälter (E) vorgesehen ist, wobei dieser Transportkreis einen ersten Abschnitt (38), welcher eine im unteren Teil des ersten Speicherbehälters (E) ausgebildete Öffnung mit dem Abgabekreis (28) stromaufwärts des Abgabeaustauschers (D) verbindet und ein Ausdehnungsgefäß (B) und wenigstens eine Förderpumpe (40) und einen zweiten Abschnitt (12) aufweist, welcher eine am unteren Ende des Abgabebehälters (D) mit einer am oberen Ende des ersten Speicherbehälters (E) ausgebildeten Öffnung verbindet.

2. Speicher nach Anspruch 1, dadurch gekennzeichnet, daß die Mittel (C₁) zum Erwärmen des Fluids (F) von einem Wärmetauscher gebildet sind, dessen Sekundärkreis von dem Zuführkreis (18) gebildet ist.

3. Speicher nach Anspruch 1 oder 2, dadurch gekennzeichnet, daß die Mittel (C₂) zum Abkühlen des Fluids (F) von einem Wärmetauscher gebildet sind, dessen Primärkreis von dem Abgabekreis (28) gebildet ist.

4. Speicher nach irgendeinem der Ansprüche 1 bis 3, dadurch gekennzeichnet, daß der Zuführkreis (18) in dem ersten Speicherbehälter (E) mit zwei Öffnungen derart mündet, daß das in dem Zuführkreis strömende Wärmeträgerfluid (F) in direkter Berührung mit dem unteren Teil des Bettes des Materials (C) steht.

5. Speicher nach irgendeinem der Ansprüche 1 bis 4, dadurch gekennzeichnet, daß der Zuführkreis (18) den Primärkreis eines Wärmetauschers (44) bildet, der im ersten Speicherbehälter (E) im unteren Teil des Bettes des Materials (C) ausgebildet ist.

6. Schmelzwärme-Wärmespeicher, umfassend :

— einen ersten Speicherbehälter (E), welcher ein Bett aus körnigem Material (C) mit hoher Schmelzwärme enthalten kann ;

— einen zweiten Speicherbehälter (E), welcher das Material (C) in flüssigem Zustand enthalten kann und mit dem unteren Ende des Speicherbehälters (E) über ein Ventil (4) verbindbar ist ;

— einen Zuführkreis (18), welcher mindestens eine Umwälzpumpe (20) für einen Wärmeträger (F) und Mittel (C₁) zum Erwärmen des Fluids (F) auf eine höhere Temperatur als die Schmelztemperatur des Materials (C) aufweist, wobei ein Teil des Zuführkreises (18) im Inneren des ersten Speicherbehälters (E) derart enthalten ist, daß das in diesem enthaltene Material (C) unter der Wirkung der Wärmezuführung des Fluids (F) schmilzt ;

— einen Abgabekreis (28), welcher mindestens eine Umwälzpumpe (30) für das Fluid (F), Mittel (C₂) zum Abkühlen des Fluids (F) auf eine niedere Temperatur als die Schmelztemperatur des Materials (C) und einen Abgabeaustauscher (D) aufweist, der mit dem oberen Teil des ersten Speicherbehälters (E) verbunden ist und in dem das Fluid (F) in direkter Berührung im Gleichstrom mit dem Material (C) im flüssigen Zustand derart strömt, daß letzteres Wärme an das Fluid (F) abgibt, wobei es in Form von Körnern erstarrt ; und

— einen Förderkreis (6) für das Material (C) im flüssigen Zustand, welcher den zweiten Speicherbehälter (E') mit dem Abgabeaustauscher (D) verbindet und wenigstens eine Umwälzpumpe (8) enthält ;

dadurch gekennzeichnet, daß

— der im Inneren des ersten Speicherbehälters (E) angeordnete Teil des Zuführkreises (18) im unteren Teil des in jenem enthaltenen Bettes des Materials (C) auf einer Höhe angeordnet ist, die einem Teil der maximalen Höhe dieses Bettes entspricht ;

— der Förderkreis (6) derart ist, daß das Material (C) im flüssigen Zustand in den oberen Teil des Abgabeaustauschers (D) eingebracht wird und in diesem von oben nach unten strömt ;

— der Abgabekreis (28) derart ist, daß das Fluid (F) im Inneren des Abgabeaustauschers (D) von oben nach unten fließt und einen ersten Abschnitt (28), der eine im unteren Teil des ersten Speicherbehälters (E) ausgebildete Öffnung (42) mit einer im oberen Teil des Abgabeaustauschers (D) ausgebildeten Öffnung (34) verbindet, Mittel (C₂) zum Abkühlen des Fluids (F), ein Ausdehnungsgefäß (B) und die genannte Umwälzpumpe (30) sowie einen zweiten Abschnitt (12) aufweist, welcher eine am unteren Ende des Abgabebehälters (D) ausgebildete Öffnung (14) mit einer am oberen Ende des ersten Speicherbehälters (E) ausgebildeten Öffnung (16) verbindet.

7. Speicher nach Anspruch 6, dadurch gekennzeichnet, daß die Mittel (C₁) zum Erwärmen des Fluids (F) von einem Wärmetauscher gebildet sind, dessen Sekundärkreis von dem Zuführkreis (18) gebildet ist.

8. Speicher nach Anspruch 6 oder 7, dadurch gekennzeichnet, daß die Mittel (C₂) zum Abkühlen des Fluids (F) von einem Wärmetauscher gebildet sind, dessen Primärkreis von dem Abgabekreis (28) gebildet ist.

9. Speicher nach irgendeinem der Ansprüche 6 bis 8, dadurch gekennzeichnet, daß der Zuführkreis (18) in dem ersten Speicherbehälter (E) mit zwei Öffnungen derart mündet, daß das in dem Zuführkreis strömende Wärmeträgerfluid (F) in direkter Berührung mit dem unteren Teil des Bettes des Materials (C) steht.

10. Speicher nach irgendeinem der Ansprüche 6 bis 9, dadurch gekennzeichnet, daß der Zuführkreis (18) den Primärkreis eines Wärmetauschers (44) bildet, der im ersten Speicherbehälter (E) im unteren Teil des Bettes des Materials (C) ausgebildet ist.

FIG. 1

FIG. 2